Europäisches Patentamt

European Patent Office

Office européen des brevets

(19)

(11) Veröffentlichungsnummer : **0 088 212**
**B1**

(12) **EUROPÄISCHE PATENTSCHRIFT**

(45) Veröffentlichungstag der Patentschrift :
21.01.87

(51) Int. Cl.⁴ : **G 05 B 19/18**

(21) Anmeldenummer : 83100556.6

(22) Anmeldetag : 22.01.83

(54) **Numerische Steuerung für Bearbeitungsmaschinen.**

(30) Priorität : 09.03.82 DE 3208389

(43) Veröffentlichungstag der Anmeldung :
14.09.83 Patentblatt 83/37

(45) Bekanntmachung des Hinweises auf die Patenterteilung : 21.01.87 Patentblatt 87/04

(84) Benannte Vertragsstaaten :
AT CH FR GB IT LI NL SE

(56) Entgegenhaltungen :
DE-A- 2 810 646
FR-A- 2 388 337
GB-A- 2 033 608
US-A- 4 019 015
PATENTS ABSTRACTS OF JAPAN, Band 4, Nr. 41, 29.
März 1980, Seite 523 M5

(73) Patentinhaber : **Dr. Johannes Heidenhain GmbH**
**Nansenstrasse 17**
**D-8225 Traunreut (DE)**

(72) Erfinder : **Schwefel, Ernst, Dipl.-Phys.**
**Reichenbergweg 2**
**D-8225 Traunreut (DE)**

## Beschreibung

Die Erfindung betrifft eine numerische Steuerung für Bearbeitungsmaschinen, insbesondere für Erodiermaschinen, gemäß dem Oberbegriff des Anspruchs 1.

Bei Erodiermaschinen ist es üblich, die Kontur in einem Werkstück, die z. B. von einer zylinderförmigen Elektrode durch Einsenken in das Werkstück in Richtung der Zylinderachse erzeugt wird, durch eine sogenannte Planetärbewegung (z. B. Kreisbewegung) in einer zur Zylinderachse senkrechten Ebene aufzuweiten.

Dabei ist es üblich, diese Planetärbewegung und die für den Erodierprozeß notwendigen Oszillationen der Elektrode bezüglich des Werkstücks zur Einstellung des Erodierspaltes an den drei Achsen des Maschinentisches für das Werkstück zu steuern. Diese Steuerung der schnellen Oszillationen ist aber wegen der im allgemeinen großen Massenträgheit des Maschinentisches ungünstig.

Weiterhin ist es bei Erodiermaschinen bekannt, die Planetärbewegung und die Einstellung des Erodierspaltes in drei Nebenachsen für die Elektrode zu steuern. Bei diesem Prinzip ist aber ein verhältnismäßig großer Steuerungsaufwand erforderlich.

Aus der GB-A-2 033 608 ist eine numerische Steuerung für eine Erodiermaschine bekannt, bei der ein Werkzeug in Form einer Drahtelektrode zwischen zwei Spannrollen in zwei Richtungen bezüglich eines Werkstückes positioniert wird. Durch die beim Erodierprozeß auf die Drahtelektrode ausgeübten Kräfte wird diese in die entgegengesetzte Bewegungsrichtung ausgelenkt, so daß sich ein Schleppfehler ergibt, der zu einer Abweichung der von der Drahtelektrode erzeugten Istbahn von einer vorgegebenen Sollbahn führen kann. Wenn der ermittelte Winkel zwischen der Istbahn und der Sollbahn einen vorbestimmten Betrag überschreitet, veranlaßt die Steuerung eine Rückzugsbewegung der Drahtelektrode in die umgekehrte Richtung ihrer Bahnbewegung entlang der bereits bearbeiteten Fläche, bis die Auslenkung der Drahtelektrode wieder aufgehoben ist. Sodann wird von der Steuerung wieder die vorherige Bahnbewegung der Drahtelektrode in Vorwärtsrichtung entlang der bereits bearbeiteten Fläche bis zum Rückzugspunkt veranlaßt und der unterbrochene Erodierprozeß wieder fortgesetzt. Diese Rückzugsbewegungen der Drahtelektrode entlang der bereits bearbeiteten Flächen können zur Beschädigung dieser Flächen führen.

Die JP-A-55-11761 offenbart eine numerische Steuerung für eine Erodiermaschine, bei der Komparatoren die mittlere Spannung im Erodierspalt mit einer Referenzspannung vergleichen und anzeigen, ob sich die Drahtelektrode zu dicht am Werkstück oder zu weit vom Werkstück entfernt befindet. Die Steuerung wandelt das Rückzugssignal und das Vorschubsignal in die Richtung für die Relativbewegung der Drahtelektrode in Übereinstimmung mit dem Quadranten um. Bei Auftreten einer Störung wird die Rückzugsrichtung erst aufgrund eines vorliegenden Rückzugssignals ermittelt.

Der Erfindung liegt die Aufgabe zugrunde, eine numerische Steuerung der erwähnten Gattung anzugeben, die Störungen des Bearbeitungsvorgangs wirksamer behebt und Beschädigungen des Werkstücks bei der Rückzugsbewegung des Werkzeugs verhindert.

Diese Aufgabe wird erfindungsgemäß durch die kennzeichnenden Merkmale des Anspruchs 1 gelöst.

Die mit der Erfindung erzielten Vorteile bestehen insbesondere darin, daß die vorgeschlagene Maßnahme eine optimale und damit zeitgünstige Bearbeitung des Werkstücks ermöglicht und den Verschleiß des Werkzeugs weiter herabsetzt.

Vorteilhafte Weiterbildungen der Erfindung entnimmt man den Unteransprüchen.

Ein Ausführungsbeispiel der Erfindung ist in der Zeichnung dargestellt.

Es zeigen

Figur 1 eine vereinfachte Seitenansicht einer Erodiermaschine und

Figur 2 eine Schaltungsanordnung der Steuerung der Erodiermaschine nach der Erfindung.

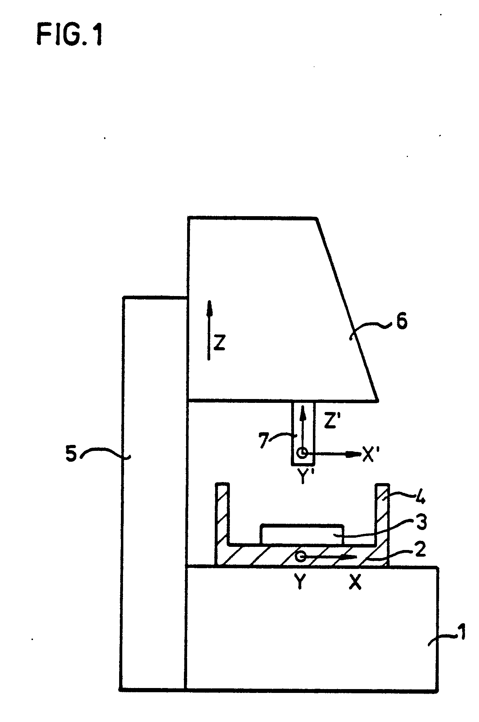

In Figur 1 ist in vereinfachter Darstellung eine Erodiermaschine gezeigt, bei der auf einem Bett 1 ein Maschinentisch 2 zur Aufnahme eines zu bearbeitenden Werkstücks 3 in X- und Y-Richtung verschiebbar angeordnet ist ; der Maschinentisch 2 weist zur Aufnahme der Erodierflüssigkeit umlaufende Wandungen 4 auf. An einem mit dem Bett 1 verbundenen Ständer 5 ist ein Träger 6 für eine Erodierelektrode 7 in Z-Richtung verschiebbar angeordnet. Die Elektrode 7 ist im Träger 6 in X'-, Y'- und Z'-Richtung verschiebbar.

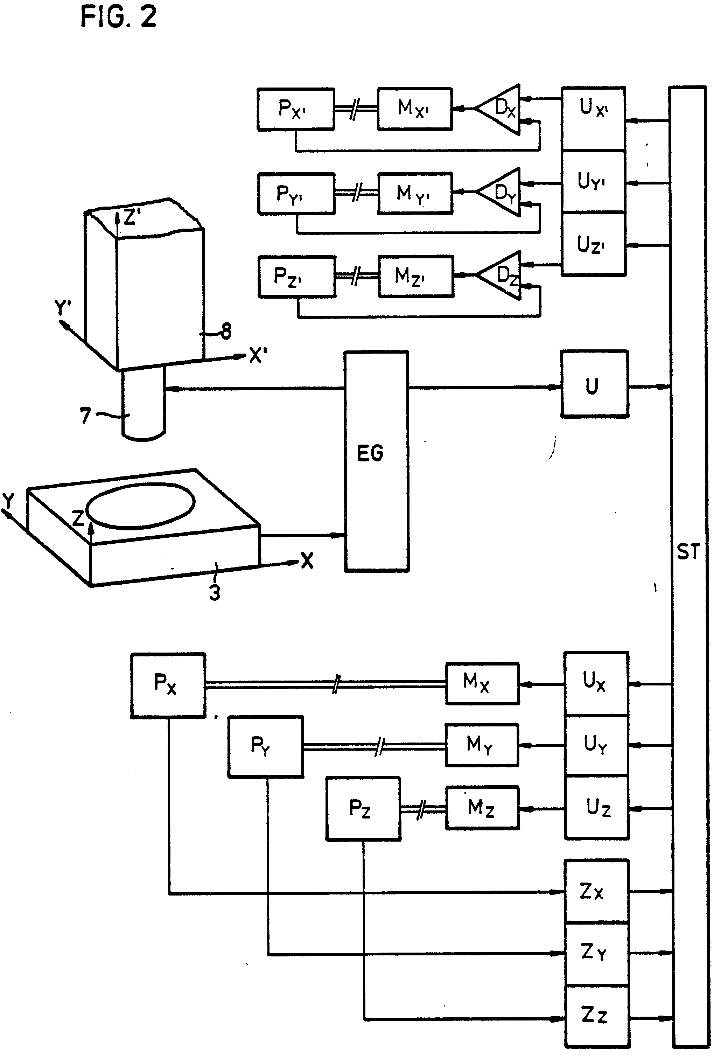

In Figur 2 ist eine Schaltungsanordnung zur erfindungsgemäßen Steuerung der Erodiermaschine nach Figur 1 dargestellt. Eine numerische Steuereinrichtung ST ist zur Positionierung des Maschinentisches 2 bzw. des Werkstücks 3 über Digital-/Analogumsetzer $U_X$, $U_Y$, $U_Z$ mit Stellmotoren $M_X$, $M_Y$, $M_Z$ verbunden, die mechanisch mit inkrementalen Positionsmeßeinrichtungen $P_X$, $P_Y$, $P_Z$ zur Messung der Position des Werkstücks 3 in der X-, Y- und Z-Richtung gekoppelt sind ; die Ausgangssignale der Positionsmeßeinrichtungen $P_X$, $P_Y$, $P_Z$ werden über Zähler $Z_X$, $Z_Y$, $Z_Z$ der Steuereinrichtung ST zugeführt. Die Steuereinrichtung ST bewirkt gleichfalls die Planetärbewegung des Maschinentisches 2 bzw. des Werkstücks 3 in der X-, Y-Richtung.

Zur Positionierung der Elektrode 7 bzw. eines Elektrodenhalters 8 ist die Steuereinrichtung ST über Digital-/Analogumsetzer $U_X'$, $U_Y'$, $U_Z'$ und Differenzverstärker $D_X$, $D_Y$, $D_Z$ mit Stellmotoren $M_X'$, $M_Y'$, $M_Z'$ verbunden, die mechanisch mit analogen Positionsmeßeinrichtungen $P_X'$, $P_Y'$, $P_Z'$ zur Messung der Position der Elektrode 7 in der X', Y' und Z'-Richtung gekoppelt sind ; die

Ausgangssignale der Positionsmeßeinrichtungen $P_X'$, $P_Y'$, $P_Z'$ werden jeweils zweiten Eingängen der Differenzverstärker $D_X$, $D_Y$, $D_Z$ zugeleitet.

Zur Durchführung des Erodierprozesses sind das Werkstück 3 und die Elektrode 7 elektrisch mit einem Erodiergenerator EG verbunden. Zur Einstellung der optimalen Breite des Erodierspaltes wird von der Steuereinrichtung ST erfindungsgemäß für die Elektrode 7 zusätzlich zu den für den Bearbeitungsprozeß notwendigen Bahnbewegungen zu jedem vorgegebenen Bahnpunkt eine von den zu bearbeitenden Flächen am Werkstück 3 wegführende Rückzugsrichtung vorab ermittelt. Die Richtungskomponenten dieser Rückzugsrichtung in der X-, Y- und Z-Richtung haben im wesentlichen die Richtung der Normalen der Bearbeitungsflächen des Werkstücks 3 an der Bearbeitungsstelle und werden von den vorgegebenen Momentanpositionen der Planetärbewegung bestimmt.

Die Größe des Rückzugsweges wird von einem Analogsignal bestimmt, das vom Erodiergenerator EG in Abhängigkeit vom momentanen Bearbeitungsprozeß über einen Analog-/Digitalumsetzer U der Steuereinrichtung ST zugeführt wird. Die Komponenten des Rückzugsweges werden von der Steuerung ST den Stellmotoren $M_X'$, $M_Y'$, $M_Z'$ zur Positionierung der Elektrode 7 in der X'-, Y'- und Z'-Richtung für die Regelung der Breite des Erodierspaltes zugeleitet ; im Falle eines elektrischen Kurzschlusses wird durch dieses Analogsignal ein sofortiges Abheben der Elektrode 7 von der Bearbeitungsfläche bewirkt.

Die Komponenten des Rückzugsweges können von der Steuerung ST wahlweise durch nicht gezeigte Umschaltmittel auch den Stellmotoren $M_X$, $M_Y$, $M_Z$ zur Positionierung des Werkstücks 3 zugeleitet werden. Die Eingabe des Analogsignals in die Steuerung ST erfolgt kontinuierlich.

Die vorgeschlagene Maßnahme kann bei beliebigen Bearbeitungsmaschinen verwendet werden. Ist beispielsweise bei einer Fräsmaschine der Druck des zu bearbeitenden Werkstücks auf das Fräswerkzeug zu groß, was durch einen geeigneten Sensor, beispielsweise durch ein piezoelektrisches Element, festgestellt werden kann, so bewirkt die Steuereinrichtung aufgrund des Ausgangssignals dieses Sensors eine Verringerung der Schnittiefe des Fräswerkzeugs, so daß dessen Belastung herabgesetzt werden kann.

## Patentansprüche

1. Numerische Steuerung für Bearbeitungsmaschinen, insbesondere für Erodiermaschinen, bei der das Werkstück (3) oder das Werkzeug (7) in wenigstens zwei Richtungen positionierbar und im Störungsfall aus der Bearbeitungsposition rückziehbar sind, wobei die Größe des Rückzugsweges in die Steuerung (ST) eingegeben wird, dadurch gekennzeichnet, daß für das Werkstück (3) oder das Werkzeug (7) zusätzlich zu den für den Bearbeitungsprozess notwendigen Bahnbewegungen zur optimalen kontinuierlichen Bearbeitung von der Steuerung (ST) zu jedem vorgegebenen Bahnpunkt eine von den zu bearbeitenden Flächen in einem von der Werkstückgeometrie abhängigen Winkel wegführende Rückzugsrichtung zur Aufhebung des Wirkeingriffes des Werkzeugs (7) am Werkstück (3) vorab ermittelt wird, die für den jeweiligen Bahnpunkt spezifisch ist.

2. Numerische Steuerung nach Anspruch 1, dadurch gekennzeichnet, daß die Rückzugsrichtung in Normalenrichtung zu den zu bearbeitenden Flächen am Werkstück (3) verläuft.

3. Numerische Steuerung nach Anspruch 1, dadurch gekennzeichnet, daß die Rückzugsrichtung bei rotationssymmetrischen Innenkonturen im Werkstück (3) in Richtung zum Symmetriezentrum hin verläuft.

4. Numerische Steuerung nach Anspruch 1, dadurch gekennzeichnet, daß der Rückzugsweg von einem gesonderten Positioniersystem (U', D, M', P') gesteuert oder dem Positioniersystem (U, M, P) für die Bahnbewegung überlagert wird.

5. Numerische Steuerung nach Anspruch 4, dadurch gekennzeichnet, daß der Rückzugsweg umschaltbar von dem gesonderten Positioniersystem (U', D, M', P') oder von dem Positioniersystem (U, M, P) für die Bahnbewegung gesteuert wird.

6. Numerische Steuerung nach den Ansprüchen 4 und 5, dadurch gekennzeichnet, daß die Vorgabe des Rückzugsweges für das gesonderte Positioniersystem (U', D, M', P') von der Steuerung (ST) in analoger Weise erfolgt.

7. Numerische Steuerung nach Anspruch 1, dadurch gekennzeichnet, daß die Eingabe der Größe des Rückzugsweges in die Steuerung (ST) in analoger Weise erfolgt.

8. Numerische Steuerung nach Anspruch 1 oder 7, dadurch gekennzeichnet, daß die Eingabe der Größe des Rückzugsweges in die Steuerung (ST) kontinuierlich erfolgt.

9. Numerische Steuerung nach Anspruch 1, dadurch gekennzeichnet, daß die Größe des Rückzugsweges von einem Sensor der Steuerung (ST) zugeführt wird.

10. Numerische Steuerung nach Anspruch 9, dadurch gekennzeichnet, daß bei spanabhebenden Bearbeitungsmaschinen ein kraftmessender Sensor am Werkzeug vorgesehen ist.

11. Numerische Steuerung nach Anspruch 1, dadurch gekennzeichnet, daß bei Erodiermaschinen die Größe des Rückzugsweges vom Erodierprozeß bestimmt wird.

## Claims

1. Numerical control for tooling machines, especially for erosion machines, in which the workpiece (3) or the tool (7) can be positioned in at least two directions and, in the event of a fault, can be retracted from the tooling position, the amount of retraction travel being entered in the control (ST), characterized in that for the workpiece (3) or the tool (7), in addition to the path movements necessary for the tooling process, to obtain the best possible continuous tooling, the control (ST) first determines, at each preset path point, a retraction direction which leads away from the surfaces to be tooled at an angle dependent on the workpiece geometry, to cancel the operative engagement of the tool (7) on the workpiece (3), and which is specific to the particular path point.

2. Numerical control according to Claim 1, characterized in that the retraction direction runs in the direction normal to the surfaces on the workpiece (3) which are to be tooled.

3. Numerical control according to Claim 1, characterized in that, when the workpiece (3) has rotationally symmetrical inner contours, the retraction direction runs towards the centre of symmetry.

4. Numerical control according to Claim 1, characterized in that the retraction travel is controlled by a separate positioning system (U', D, M', P') or is superimposed on the positioning system (U, M, P) for the path movement.

5. Numerical control according to Claim 4, characterized in that the retraction travel is controlled reversibly by the separate positioning system (U', D, M', P') or by the positioning system (U, M, P) for the path movement.

6. Numerical control according to Claims 4 and 5, characterized in that the presetting of the retraction travel for the separate positioning system (U', D, M', P') is carried out by the control (ST) in the analogue mode.

7. Numerical control according to Claim 1, characterized in that the amount of retraction travel is entered in the control (ST) in the analogue mode.

8. Numerical control according to Claim 1 or 7, characterized in that the amount of retraction travel is entered in the control (ST) continuously.

9. Numerical control according to Claim 1, characterized in that the amount of retraction travel is fed to the control (ST) by a sensor.

10. Numerical control according to Claim 9, characterized in that, in chip-removing tooling machines, a force-measuring sensor is provided on the tool.

11. Numerical control according to Claim 1, characterized in that, in erosion machines, the amount of retraction travel is determined by the erosion process.

**Revendications**

1. Commande numérique pour machines d'usinage, notamment pour machines à érosion, la pièce à usiner (3) ou l'outil (7) pouvant être positionné selon deux directions au moins et être retiré de la position d'usinage en cas de défaillance, et la grandeur de la course de retrait étant introduite dans la commande (ST), caractérisée en ce que la commande (ST) détermine d'avance, pour la pièce à usiner (3) ou l'outil (7), outre les mouvements de trajectoire nécessaires au processus d'usinage, en vue de l'usinage en continu optimal, pour chaque point donné de la trajectoire, une direction de retrait par rapport aux surfaces à usiner selon un angle dépendant de la géométrie de la pièce à usiner, afin de supprimer l'action de l'outil (7) sur la pièce à usiner (3), cette direction de retrait étant spécifique à chaque point de la trajectoire.

2. Commande numérique selon la revendication 1, caractérisée en ce que la direction de retrait est normale aux surfaces à usiner sur la pièce (3).

3. Commande numérique selon la revendication 1, caractérisée en ce que la direction de retrait, dans le cas de profils intérieurs à symétrie de révolution de la pièce à usiner (3), est orientée vers le centre de symétrie.

4. Commande numérique selon la revendication 1, caractérisée en ce que la course de retrait est commandée par un système de positionnement autonome (U', D, M', P') ou est superposée au système de positionnement (U, M, P) régissant les mouvements de trajectoire.

5. Commande numérique selon la revendication 4, caractérisée en ce que la course de retrait est commandée par commutation au moyen du système de positionnement autonome (U', D, M', P') ou du système de positionnement (U, M, P) régissant les mouvements de trajectoire.

6. Commande numérique selon les revendications 4 et 5, caractérisée en ce que l'introduction de la course de retrait dans le système de positionnement autonome (U', D', M', P') s'effectue sous forme analogique par la commande (ST).

7. Commande numérique selon la revendication 1, caractérisée en ce que l'introduction dans la commande (ST) de la grandeur de la course de retrait s'opère sous forme analogique.

8. Commande numérique selon la revendication 1 ou 7, caractérisée en ce que l'introduction dans la commande (ST) de la grandeur de la course de retrait s'opère en continu.

9. Commande numérique selon la revendication 1, caractérisée en ce que la grandeur de la course de retrait est introduite par un capteur de la commande (ST).

10. Commande numérique selon la revendication 9, caractérisée en ce que, dans le cas de machines d'usinage travaillant par enlèvement de copeaux, un capteur dynamométrique est prévu sur l'outil.

11. Commande numérique selon la revendication 1, caractérisée en ce que, dans le cas de machines à érosion, la grandeur de la course de retrait est déterminée par le processus d'érosion.

FIG.1

# FIG. 2